# EUROPEAN PATENT APPLICATION

(11) **EP 4 564 012 A1**
(43) Date of publication of application: **04.06.2025**
(21) Application number: 24216608.0
(22) Date of filing: 29.11.2024
(51) Int. Cl.: G01P 5/26, G01P 13/02

(54) **LASER PULSER SYSTEM FOR A LASER AIR DATA SYSTEM**

(30) Priority: 30.11.2023 US 202318525183
(71) Applicant: Rockwell Collins, Inc., Cedar Rapids, IA 52498 (US)
(72) Inventor: HALAMA, Gary E, Savage (US); ACOTT, Phillip, Burnsville (US)
(74) Representative: Dehns

(57) **Abstract**

A laser pulser system (100) is disclosed for a Laser Air Data System (LADS) sensor. The system may include a Faraday isolator (105). The Faraday isolator (105) may include an electro-magnet (108) which generates an oscillating magnetic field. A resonant circuit may be electrically coupled to the electro-magnet (108) and may supply a current to the electro-magnet (108). The current may allow the isolator (105) to oscillate between an "on" and "off' state. The system may also include a laser source (102) which is coupled to the Faraday isolator (105). The laser source (102) may produce a pulsed laser output.

## Description

### TECHNICAL FIELD

The present invention generally relates to laser systems and, more particularly, to a laser pulser system with an electromagnetic Faraday isolator.

### BACKGROUND

Laser Air Data System (LADS) sensors have emerged as a groundbreaking technology in the field of airborne measurement systems, revolutionizing the way airspeed parameters are measured. Traditional air data sensors, use pressure and temperature sensors to determine indicated air speed (IAS), calibrated air speed (CAS), and true airspeed (TAS). In contrast, LADS sensors use laser-based techniques to directly measure TAS. When LADS is combined with traditional systems aircraft safety is increased, increasing the aircraft operational envelope.

LADS sensors leverage laser technology to precisely gauge the airflow surrounding an aircraft, providing real-time measurements of airspeed, angle of attack, and other pivotal flight parameters. These sensors apply laser Doppler velocimetry, laser ranging, and laser spectroscopy principles to analyze the characteristics of scattered laser light. Through the measurement of frequency shifts in the scattered light, LADS sensors can determine the speed and direction of the airflow, resulting in accurate and responsive air data measurements. Installation of LADS sensors serves to mitigate the impact of icing conditions, ice accumulation, and subsequent loss of air data information. Furthermore, the design of LADS sensor installation aims to minimize the probability of damage from bird strikes affecting sensor operation. As the aviation industry continues to evolve, the demand for more advanced and reliable air data measurement systems increases.

### SUMMARY

A laser pulser system for a Laser Air Data System (LADS) sensor is disclosed, in accordance with one or more embodiments of the present disclosure. In some embodiments, the system may include a Faraday isolator. In some embodiments, the Faraday isolator may include an electro-magnet configured to generate an oscillating magnetic field. In some embodiments, a resonant circuit may be electrically coupled to the electro-magnet and supply a current to the electro-magnet, allowing the isolator to oscillate between an "on" and "off' state. In some embodiments, the system may include a laser source coupled to the Faraday isolator. In some embodiments, the laser source may produce a pulsed laser output.

A Laser Air Data System (LADS) sensor is disclosed, in accordance with one or more embodiments of the present disclosure. In some embodiments, the LADS sensor may include a pulsed laser source configured to oscillate between an "off" state and an "on" state. In some embodiments, the LADS sensor may include a background data collection module configured to collect background light during the "off" state of the pulsed laser source. In some embodiments, the LADS sensor may include a data processing module configured to subtract the background data from the laser power data.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a cross-sectional view of an electro-magnetic Faraday isolator in an "on" state, in accordance one or more embodiments of the present disclosure;
FIG. 1B is a cross-sectional view of an electro-magnetic Faraday isolator in an "off" state, in accordance one or more embodiments of the present disclosure;
FIG. 2A depicts a flow diagram illustrating the pulsed laser system while in an "on" state, in accordance with one or more embodiments of the present disclosure.
FIG. 2B depicts a flow diagram illustrating the pulsed laser system while in an "off" state, in accordance with one or more embodiments of the present disclosure.
FIG. 3A depicts a flow diagram illustrating an optical amplifier reflective configuration in an "on" state, in accordance with one or more embodiments of the present disclosure.
FIG. 3B depicts a flow diagram illustrating an optical amplifier having a reflective configuration in an "off" state, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to a laser pulser system with an electromagnetic Faraday isolator for pulsed laser operation and background light subtraction in Laser Air Data System (LADS) sensors. The electromagnetic Faraday isolator, driven by a resonant circuit, may be used to generate an oscillating magnetic field and produce pulsed laser output. The pulsed laser operation enables the collection of background data during laser off states.

A laser pulser system 100 is disclosed, in accordance with one or more embodiments of the present disclosure. The laser pulser system 100 may be configured to enable pulsed laser operation and facilitate background light subtraction. In some embodiments, the laser pulser system 100 may include at least one of an electromagnetic Faraday isolator 105, a half-wave plate 110, or a laser source 102.

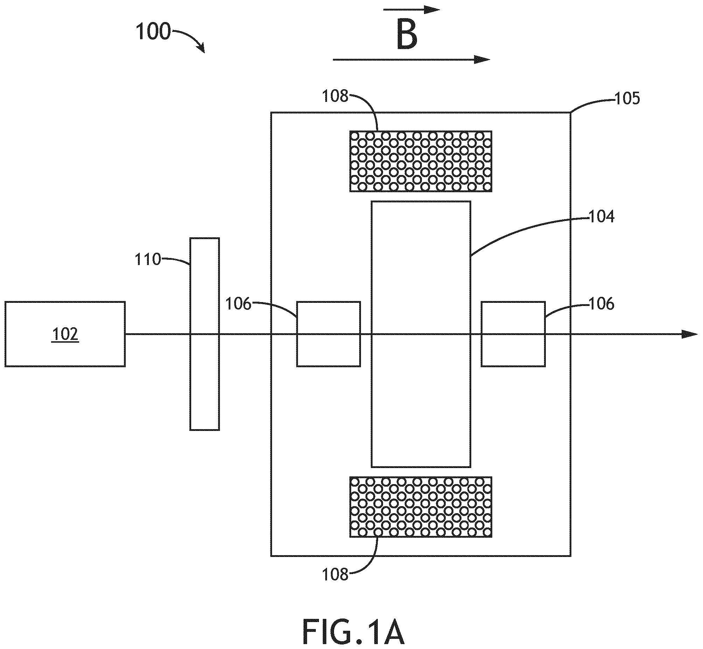

FIG. 1A illustrates a cross-sectional view of an electromagnetic Faraday isolator 105 in an "on" state, according to one or more embodiments of the present disclosure.

In some embodiments, the laser pulser system 100 may include a Faraday isolator 105. For example, the electromagnetic Faraday isolator 105 may include at least two polarizing beam splitters 106, at least one electromagnet 108, and Faraday material 104. By way of another example, the at least one electromagnet 108 may include a coil of wire and Faraday rotating material 104. The electromagnet 108 may be configured to create the external magnetic field required to induce the Faraday effect in the Faraday rotating material 104. When the magnetic field aligns with the laser light propagation direction, the polarization undergoes counterclockwise (CCW) rotation as you look in the propagation direction. Conversely, when the magnetic field opposes the propagation direction, the polarization rotates clockwise (CW) as you look in the propagation direction.

It is noted herein that the Faraday material may rely on the interaction between the magnetic field and the incoming light to rotate the polarization of the light. Further, the direction and strength of the magnetic field may be controlled to achieve a desired degree of polarization rotation.

In some embodiments, Polarizing Beam Splitters (PBSs) may be configured as beam cubes designed to split light into reflected S-polarization and transmitted P-polarization beams at a glass interface inside the cube. For the P-polarization, the E-field is parallel to the plane of incidence on the inside of the PBS, while S-polarization is orthogonal to the P-polarization.

In some embodiments, the laser pulser system 100 may include a resonant circuit. For example, the resonant circuit may be electrically coupled to the at least one electromagnet 108 of the Faraday isolator 105 and serve as the driver to the at least one electromagnet 108. By way of another example, the resonant circuit may be configured to supply a current to the at least one electromagnet 108, enabling the magnetic field of the isolator to oscillate between an "on" and "off" state.

In some embodiments, the laser pulser system 100 may include a laser source 102 coupled to the electromagnetic Faraday isolator 105. For example, the laser source 102 may be configured to generate a laser beam used in the Laser Air Data System (LADS) sensor. The laser source 102 may include a plurality of laser technologies such as, but not limited to, solid-state lasers, semiconductor lasers, fiber lasers or the like.

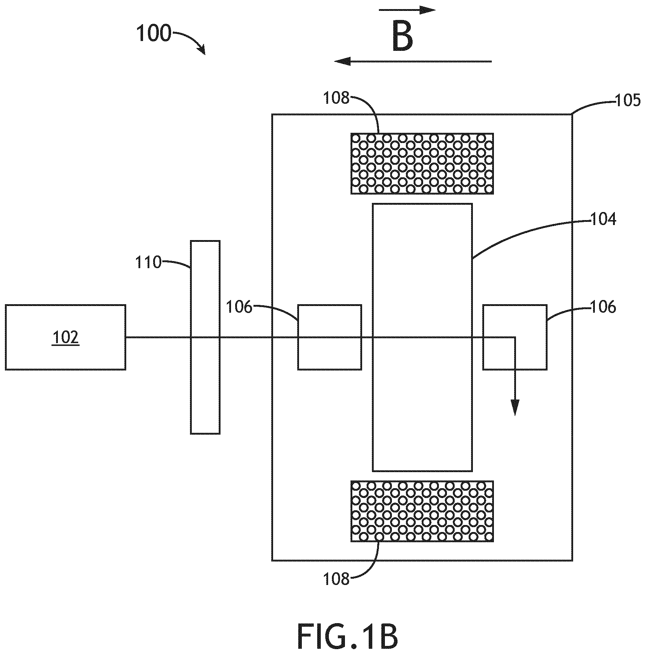

Referring now to FIG. 1B, a cross-sectional view of an electro-magnetic Faraday isolator 105 in an "off" state is illustrated, in accordance one or more embodiments of the present disclosure. The direction of the external magnetic field plays a crucial role in determining the behavior of the system 100. Specifically, the system may be configured in the "off" state when the direction of the magnetic field is opposite the direction of laser beam propagation. On the other hand, in the "on" of the Faraday isolator 105, the external magnetic field is aligned with the direction of the laser beam propagation.

In some embodiments, the LADS sensor may be configured to collect background data during the laser "off" state. For example, the LADS sensor may include a background data collection module and a data processing module. In some embodiments, the background data collection module may be configured to collect background light, which may include, but is not limited to, sunlight or any other interfering sources. Subsequently, during the laser "on" state, the LADS sensor may be configured to collect both the background and primary signal data (e.g., the laser light backscatter return from the atmosphere.)

In some embodiments, the laser pulser system 100 may be configured to seed one or more optical amplifiers 302. For example, the laser pulser system 100 may include one or more Faraday isolators 105 configured to prevent back reflections from entering the laser source 102 or optical amplifiers 302. In some embodiments, a Faraday switch may be configured in at least one of a transmissive or reflective operation. For example, the Faraday switch may be configured to deflect the laser beam using polarization, causing the power along the primary path to alternate between an "on" and "off" state. It is noted herein that when the magnetic field and light propagation direction are aligned, the polarization vector rotation is configured in a CCW direction, and when the magnetic field and light propagation direction are in opposite directions, the polarization vector rotation is configured in a CW direction. It is further noted that the "off" state established by the reflective Faraday isolator is further configured to prevent amplified spontaneous emission (ASE) produced by the optical amplifier from contaminating the output light.

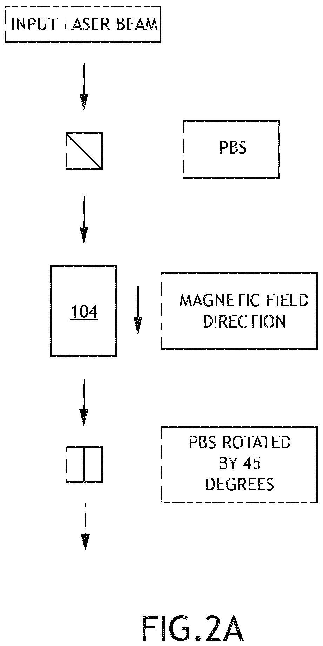

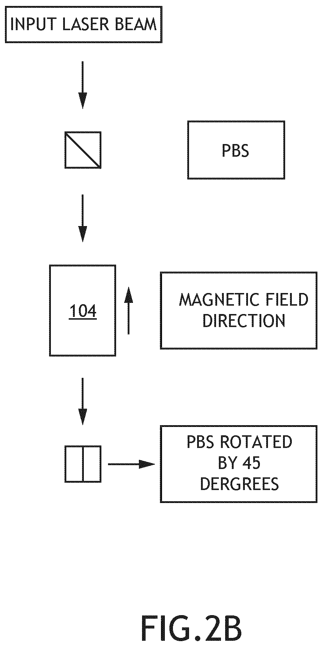

FIGS. 2A-2B illustrate exemplary flow diagrams of the propagation direction and polarization states of the laser pulser system 100 transmitting a laser beam through the electromagnetic Faraday isolator 105, in accordance with one or more embodiments of the present disclosure. In some embodiments, the laser pulser system 100 may be configured in the "on" state, as shown in FIG. 2A. In other embodiments, the laser pulser system 100 may be configured in the "off" state, as shown in FIG. 2B. In some embodiments, FIGS. 2A-2B showcase the transmitted configuration of the Faraday switch for the "on" and "off" states, respectively. In the context of the Laser Air Data System (LADS) sensor, this configuration may be utilized with the master laser.

Referring now to FIG. 2A, the input laser beam polarization is aligned to the P-polarization of the first Polarizing Beam Splitter 106 (PBS). In some embodiments, the alignment of the input laser beam polarization may be achieved in a plurality of methods including, but not limited to, mechanical rotation of a linearly polarized laser or by introducing a half-wave plate 110, another Faraday rotator, or another polarization rotation device. It is noted herein that the input laser may have any linear polarization. In some embodiments, the first PBS may be configured to pass all linearly polarized laser light as an output. For example, the laser beam may be allowed to pass through the first PBS in response to the laser beam linear polarization aligned with the PBS P-polarization. By way of another example, the laser beam may be reflected by the PBS in response to the laser beam linear polarization aligned with the PBS S-polarization.

In some embodiments, the Faraday material 104 may include an applied magnetic field in the direction of propagation, which may be generated by a wire coil with an applied current passing through the coil windings. For example, the Faraday material 104 and orientation may be selected to rotate the linear polarization by 45 degrees after passing through the rotator, based on a positive Verdet constant. In other embodiments, the laser beam's output polarization after passing through the Faraday rotator may be configured to align with the P-polarization of the second PBS. For example, the second PBS may be aligned to transmit the P-polarization, representing the "on" state of the Faraday switch.

Referring now to FIG. 2B, the exemplary flow diagram depicting the laser pulser system 100 in the "off" state is shown, in accordance with one or more embodiments of the present disclosure. For example, the first PBS and the second PBS may be configured in the same way as described in FIG. 2A. By way of another example, the input laser beam may be configured to maintain the same polarization and propagation direction as described in FIG. 2A. However, in some embodiments, the magnetic field may be applied to the Faraday material 104 in the opposite direction of the laser propagation (as indicated by the arrow positioned next to the Faraday material 104). For example, the Faraday material 104 may rotate the linear input polarization by 45 degrees to align with the S-polarization of the second PBS. For example, the second PBS may be configured to reflect the laser beam. As the laser beam is reflected, it does not exit through the transmit port, representing the transmitted configuration's "off" state. It is noted herein that the transmit port has been described as the "off" state; however, the system 100 is not limited to the named configurations described above.

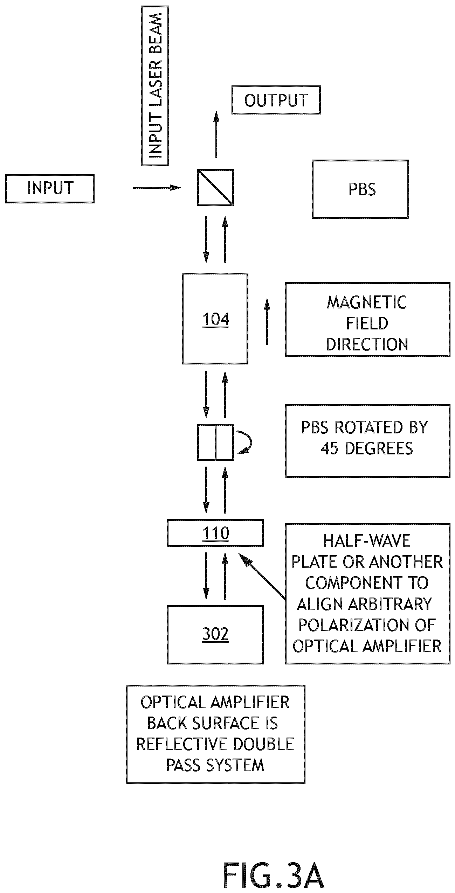

In some embodiments, the laser pulser system 100 may be configured as an optical isolator system. For example, the optical isolator system may include an optical amplifier 302. FIGS. 3A-3B illustrate flow diagrams of the propagation direction of the laser beam as it passes through the optical isolator system. As shown in the exemplary diagrams of FIGS. 3A-3B, the input laser beam is polarized along the S-polarization of the first PBS to that it is reflected. The beam passes through the 104 and the polarization is rotated by 45 degrees to either align the polarization to the S- or P- polarization axis of the second PBS (which is rotated by 45 degrees with respect to the first PBS). In some embodiments, the exemplary flow diagrams of FIGS. 3A-3B illustrate the reflected input configuration of the Faraday switch for the "on" and "off" states, respectively. In the context of the Laser Air Data System (LADS) sensor, this configuration may be employed with any of the optical amplifiers 302. It should be noted that the laser beam may enter the optical amplifier 302 and be reflected out through the same input port.

In some embodiments, the laser beam may pass through the Faraday rotator more than once, following both the input path and the output path. For example, the input path may primarily propagate along the direction down the page. By way of another example, the output path may propagate along the direction up the page.

Referring now to FIG. 3A, the Faraday switch may be configured in the "on" state. In some embodiments, the input laser beam is S-polarized with respect to the first PBS and reflects off the PBS. For example, the Faraday material 104, orientation, and the magnetic field direction may be selected to rotate the polarization by 45 degrees and is aligned with P-polarization of the second PBS, thereby, passing the laser beam. For example, the polarization of the optical amplifier 302 may be adjusted to match this polarization by mechanically rotating the amplifier 302, using a half-wave plate 110, or employing other optical components capable of rotating the polarization. Further, this alignment may ensure maximum optical seeding and therefore optical amplification. In other embodiments, the output polarization diagram, which represents the light traveling up the page. The laser beam may re-enter the half-wave plate 110. The half-wave plate 110 may rotate the polarization by 45 degrees to align with the P-polarization of the second PBS, thereby passing the laser beam. After passing through the Faraday rotator, the laser beam's polarization may align to the P-polarization of the first PBS, and the first PBS may transmit the laser beam.

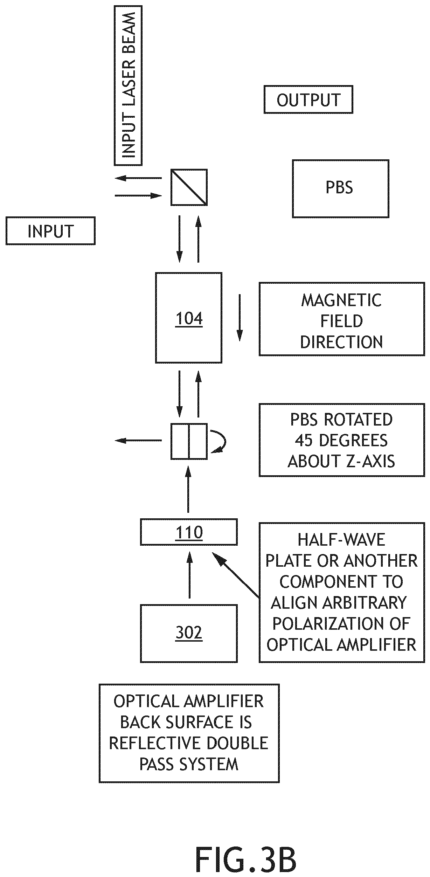

Referring now to FIG. 3B, the magnetic field may be reversed. Once again, the input laser beam is S-polarized with respect to the first PBS and reflects off the PBS. The Faraday rotator may rotate the laser beam's polarization by 45 degrees to be aligned with the S-polarization of the second PBS. The second PBS may reflect this polarization, preventing the laser beam from entering the optical amplifier 302. For example, the emission from the optical amplifier 302 may propagate along the output path (e.g., up the page) and may be reflected by the second PBS. It is noted herein that the configuration described above may be representative of the "off" state for the reflective Faraday switch.

It is further noted that the description above may provide insights into the optical amplifier reflective configuration, offering an understanding of the propagation direction and polarization states of the laser beam as it traverses the optical isolator system. This configuration is particularly suitable for Laser Air Data System (LADS) sensors and other applications utilizing optical amplifiers 302, where the laser beam may enter and exit through the same input port. By passing through the Faraday rotator twice along the input and output paths, precise control of polarization may be achieved, allowing for desired modulation and amplification processes.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A laser pulser system for an Laser Air Data System (LADS) sensor, comprising:
a Faraday isolator having an electro-magnet configured to generate an oscillating magnetic field;
a resonant circuit electrically coupled to the electro-magnet and configured to supply a current to the electro-magnet, allowing the magnetic field of the isolator to oscillate between an "on" and "off" state; and
a laser source coupled to the Faraday isolator, the laser source configured to produce a pulsed laser output.

2. The laser pulser system of Claim 1, wherein the Laser Air Data System (LADS) sensor further comprises:
a background data collection module configured to collect background light during the off state of the pulsed laser output; and
a data processing module configured to subtract the background data from the pulsed laser output data collected during the on state to obtain primary signal data.

3. The laser pulser system of Claim 1 or 2, wherein the system further comprises:
a faraday switch configured to transmit or reflect the pulsed laser output using a polarization, the Faraday switch comprising:
a first polarizing beam splitter (PBS) configured to transmit the pulsed laser output having an aligned linear polarization;
the Faraday isolator configured to rotate the linear polarization of the pulsed laser output, respective to the on and off states; and
a second PBS configured to at least one of transmit or reflect the pulsed laser output to achieve pulsing of the laser respective at least one of the on and off states.

4. The laser pulser system of Claim 3, wherein the system further comprises:
an optical amplifier configured to amplify a pulsed seed laser output, with the Faraday isolator in the off state, having a reflective configuration, wherein the pulsed seed laser output enters and exits through an input port, and the Faraday isolator, positioned along a path of the pulsed seed laser output, rotates the light between the first and the second PBS and directs the pulsed seed laser output away from the optical amplifier.

5. The laser pulser system of Claim 4, wherein the system further comprises:
the optical amplifier configured to amplify the pulsed laser output in the on state, the optical amplifier having the reflective configuration, wherein the pulsed laser output enters through the input port and exits through an output port, and the Faraday isolator is positioned along the pulsed laser output path between the first and the second passes through the optical amplifier.

6. The laser pulser system of Claim 4 or 5, wherein the Faraday isolator is configured as a reflective Faraday isolator, wherein a magnetic field direction of a Faraday rotator is reversed, causing an input laser to undergo a polarization rotation of 45 degrees after passing through the Faraday rotator, resulting in a polarization along an S-polarization of the second PBS, and wherein the second PBS reflects the rotated polarization, preventing the laser from entering the optical amplifier and preventing seeding of the optical amplifier.

7. The laser pulser system of Claim 6, wherein a low-level light produced by the optical amplifier is rotated by the Faraday rotator to be reflected by the first PBS, thereby establishing the off state for the reflective Faraday isolator configuration.

8. The laser pulser system of Claim 7, wherein the off state established by the reflective Faraday isolator is further configured to prevent amplified spontaneous emission (ASE) produced by the optical amplifier from contaminating the output light.

9. A Laser Air Data System (LADS) sensor, comprising:
a pulsed laser source configured to produce a pulsed laser output and oscillate between an "off" state and an "on" state;
a background data collection module configured to collect background light during an off state of the pulsed laser output; and
a data processing module configured to subtract the background data from the pulsed laser output data collected during the on state to obtain primary signal data.

10. The LADS sensor of Claim 9, wherein the sensor is coupled to a Faraday isolator.

11. The LADS sensor of Claim 10, further comprising:
a faraday switch configured to deflect the pulsed laser output using polarization, the Faraday switch comprising:
a first polarization beam splitter (PBS) configured to transmit the pulsed laser output having a first linear polarization;
the Faraday isolator configured to rotate the polarization of the laser beam; and
a second PBS configured to add an additional controlled rotation of the polarization of the pulsed laser output to achieve the on and off states of the pulsed laser source.

12. The LADS sensor of Claim 10 or 11, further comprising:
an optical amplifier configured in the off state, the optical amplifier having a reflective configuration, wherein the pulsed laser output enters and exits through an input port, and the Faraday isolator is positioned along the pulsed laser output path between a first and second pass through the optical amplifier.

13. The LADS sensor of Claim 10 or 11, further comprising:
the optical amplifier configured to amplify the pulsed laser output in the on state, the optical amplifier having a reflective configuration, wherein the pulsed laser output enters through the input port and exits through an output port, and the Faraday isolator is positioned along the pulsed laser output path between the first and the second passes through the optical amplifier.

14. The LADS sensor of Claim 12, wherein the Faraday isolator is configured as a reflective Faraday isolator, wherein a magnetic field direction of a Faraday rotator is reversed, causing a input laser to undergo a polarization rotation of 45 degrees after passing through the Faraday rotator, resulting in a polarization that is reflected by the second PBS, preventing the laser from entering the optical amplifier, thereby establishing the off state for the reflective Faraday isolator configuration.

15. The system of Claim 14, wherein the off state established by the reflective Faraday isolator is further configured to prevent amplified spontaneous emission (ASE) produced by the optical amplifier from contaminating the output light.
